# FASCICULE DE BREVET EUROPEEN

(11) **EP 1 104 709 B1**
(45) Date de publication et mention de la délivrance du brevet: **31.10.2007**
(21) Numéro de dépôt: 00460067.2
(22) Date de dépôt: 01.12.2000
(51) Int. Cl.: B60J 1/20

(54) **Store à enrouleur à boîtier comprenant des éléments d'accrochage**
Rollo mit Gehäuse und Halteelementen
Roller blind with enclosure comprising fastening elements

(30) Priorité: 03.12.1999 FR 9915503
(43) Date de publication de la demande: 06.06.2001
(73) Titulaire: WAGON SAS, 79300 Bressuire (FR)
(72) Inventeur: Jincheleau, Michel, 79320 Moncoutant (FR)
(74) Mandataire: Vidon, Patrice

(56) Documents cités:
- EP-A- 0 424 327
- FR-A- 2 751 272
- US-A- 5 048 788

## Description

Le domaine de l'invention est celui des stores à enrouleur, notamment pour véhicules automobiles. Plus précisément, l'invention concerne les stores destinés à être rapportés sous un élément du véhicule formant support, tel qu'une tablette arrière, l'habillage d'une porte de hayons, ...

Selon cette technique, une ouverture en forme de fente est ménagée dans l'élément support, par laquelle peut circuler le rideau du store. Le boîtier et le mécanisme d'enroulement du store sont donc camouflés sous l'élément support, et seul est apparent, lorsque que le store est replié, la barre de tirage, qui vient prendre appui sur l'ouverture ménagée dans l'élément support.

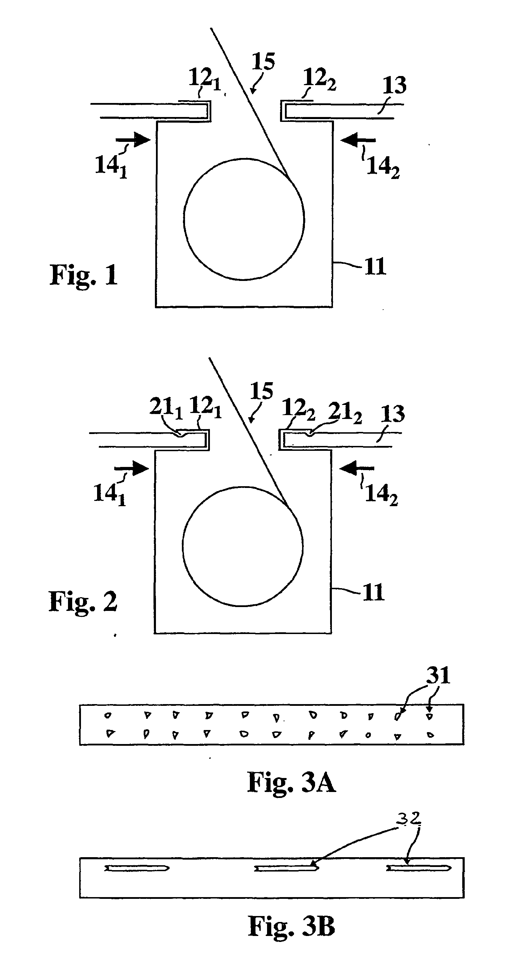

Plusieurs méthodes sont connues pour solidariser le boîtier du store à son élément support. On connaît notamment, sous le nom de store à cassette, ou boîtier, pincée, une technique selon laquelle la fente ménagée dans le boîtier pour permettre le passage du rideau est prolongée par des lèvres de fixation, qui viennent prendre appui sur l'élément support, ainsi que cela est illustré schématiquement par la figure 1.

La figure 1 illustre donc, en coupe, un store à cassette pincée 11 présentant deux lèvres d'appui 12₁ et 12₂, venant prendre appui sur une tablette arrière 13 ou un autre élément d'habillage du véhicule.

Le document EP 0 424 327 présente un store à boîtier pincé selon le préambule de la revendication 1.

Pour mettre en place un tel store, il est nécessaire de pincer le boîtier fortement (flèches 14₁ et 14₂), à l'aide d'un outil spécial, de façon que les lèvres 12₁ et 12₂ se rapprochent l'une de l'autre et puissent être introduites dans l'ouverture 15. Une fois cette opération effectuée, on relâche la pression en retirant l'outil, pour que les lèvres se positionnent sur l'habillage 13.

La demande de brevet FR-99 10383 non encore publiée, propose une autre technique, selon laquelle le boîtier est pré-pincé, avant sa pose, ce qui simplifie le montage.

Le simple appui des lèvres 12₁ et 12₂ sur l'habillage 13 est très souvent insuffisant pour assurer une fixation et un maintien de bonne qualité, au cours du temps, en particulier lorsque l'habillage, et notamment son revêtement, est souple ou à tout le moins peu rigide. C'est aujourd'hui souvent le cas, dans de nombreux véhicules automobiles.

Pour renforcer ce maintien, on a pensé à coller les lèvres à l'habillage. Toutefois, même dans ce cas, on constate souvent que la fixation est, ou devient, insuffisante. De plus, le collage suppose une opération supplémentaire lors du montage. Le montage (et/ou la fabrication) est plus complexe, et donc plus coûteux.

L'invention a notamment pour objectif de pallier ces inconvénients de l'art antérieur.

Plus précisément, l'invention a pour objectif de fournir un store à enrouleur, destiné à être mis en place sur un élément support quelconque d'un véhicule, qui puisse être fixé solidement et efficacement à l'élément support.

Un autre objectif de l'invention est de fournir un tel store à enrouleur, qui soit peu coûteux à réaliser, et qui ne nécessite pas d'opération supplémentaire lors du montage.

L'invention a également pour objectif de fournir un tel store à enrouleur, qui conserve des qualités esthétiques (discrétion, adaptation au support,...), une fois monté.

Ces objectifs, ainsi que d'autres qui apparaîtront par la suite, sont atteints à l'aide d'un store à enrouleur selon la revendication 1.

Selon l'invention, au moins une desdites lèvres de fixation présente au moins un élément d'accrochage faisant saillie en direction dudit élément support et prévu pour s'ancrer dans ledit élément support.

Ainsi, le boîtier est solidarisé au support de façon efficace, précise et durable.

Selon un mode de réalisation avantageux de l'invention, l'extrémité d'au moins une desdites lèvres est repliée de façon à former un angle inférieur ou égal à 90° avec le reste de ladite lèvre.

Ce mode de réalisation est particulièrement facile et peu coûteux à mettre en oeuvre.

Selon un autre mode de réalisation de l'invention, on prévoit avantageusement que la surface d'appui d'au moins une desdites lèvres présente une série de pointes ou d'éléments formant crochet.

Bien que des moyens d'accrochage puissent être prévus sur une seule lèvre, les deux lèvres sont avantageusement équipées d'éléments d'accrochage identiques.

Selon une approche avantageuse de l'invention, destinée à renforcer encore la qualité de l'accrochage, lesdits éléments d'accrochage sont configurés de façon à coopérer avec des encoches ou des ouvertures prévues à cet effet sur ledit élément support.

Ces encoches ou ouvertures peuvent être prévues à l'avance, lors de la fabrication du véhicule, et/ou réalisées au moment du montage du store.

Selon un autre mode de réalisation de l'invention, on prévoit avantageusement qu'au moins un desdits éléments d'accrochage coopère avec un élément de renfort et/ou de maintien solidarisé audit élément support.

Cela permet de sécuriser et/ou de faciliter le montage, quel que soit le support.

Avantageusement, ledit élément de renfort et/ou de maintien est une agrafe, rapportée à l'extrémité dudit élément support, puis solidarisée à ce dernier par écrasement.

Cette technique s'avère utile notamment pour pallier des difficultés de maintien sur certains revêtements.

On peut prévoir, par exemple, 3 ou 4 agrafes montées localement, sur lesquelles on vient "clipper" la cassette.

Un avantage de cette technique est que l'agrafe peut être sertie sur le revêtement, et surtout qu'elle peut être réalisée plus facilement, et dans un matériau plus épais et plus rigide.

Cette approche permet de n'avoir qu'une seule cassette, pour une variété de revêtements. Pour les cas particuliers, des agrafes spécifiques sont réalisables. On peut également prévoir, pour certaines situations, de ne pas utiliser d'agrafes.

De façon préférentielle, ledit élément de renfort et/ou de maintien présente, dans le plan de la partie supérieure dudit élément support, une extrémité susceptible de coopérer avec au moins un desdits éléments d'accrochage.

Dans ce cas, avantageusement, l'extrémité d'au moins une desdites lèvres est repliée de façon à venir en contact avec ladite extrémité dudit élément de renfort et/ou de maintien.

Selon un autre aspect avantageux, ledit élément de renfort et/ou de maintien comprend au moins un élément d'accrochage prévu pour s'ancrer dans la partie inférieure dudit élément support.

Il peut notamment s'agir de pointes prévues pour s'enfoncer dans ledit élément support.

Selon encore un autre aspect avantageux, ledit élément de renfort et/ou de maintien présente au moins une extension formant butée, et prévue pour coopérer avec ledit boîtier, ce dernier venant prendre appui sur ladite extension.

D'autres caractéristiques et avantages de l'invention apparaîtront plus clairement à la lecture de la description de deux modes de réalisation préférentiels de l'invention, donnés à titre de simples exemples illustratifs et non limitatifs, et des figures annexées, parmi lesquelles :
- la figure 1, déjà commentée en préambule, illustre un store à cassette pincée de type connu ;
- la figure 2 illustre, en coupe, un mode de réalisation de l'invention ;
- les figures 3A et 3B, présentent deux variantes de moyens d'accrochage selon l'invention ;
- la figure 4 illustre une agrafe, destinée à être rapportée sur le support du store, selon un mode de réalisation de l'invention ;
- la figure 5 montre, en coupe, la mise en oeuvre de l'agrafe de la figure 4.

Le store de l'invention peut donc notamment être mis en place sur la tablette arrière d'un véhicule, sur l'habillage d'une porte, ...

Souvent, ces supports, et en particulier leur revêtement, sont souples. Pour obtenir une fixation efficace et durable, on prévoit donc selon l'invention, des éléments d'accrochage au revêtement.

Selon le mode de réalisation de la figure 2, ces éléments d'accrochage sont obtenus par simple repliement 21, 21₂ de l'extrémité de chacune des lèvres 12₁ et 12₂. Ces deux extrémités repliées viennent s'accrocher, ou s'ancrer, dans le revêtement.

Pour que l'accrochage soit le plus efficace possible, le repliement est tel que l'angle entre le plan principal défini par la lèvre et l'extrémité correspondante est inférieur (ou au plus égal) à 90°, l'extrémité revenant vers la lèvre.

En d'autres termes, l'extrémité de la lèvre subit un repliement sur un angle de plus de 90°.

L'extrémité 21₁,21₂ s'immobilise alors de façon sûre et durable dans le revêtement.

La longueur de l'extrémité repliée est relativement faible (quelques millimètres), c'est-à-dire suffisante pour obtenir un accrochage sans détérioration importante du support, tout en ne nuisant pas à l'appui de la lèvre et à l'aspect esthétique.

Selon une variante de l'invention, les éléments d'accrochage peuvent être des pointes, ou des crochets, 31 répartis sur la surface de la lèvre destinée à venir en contact avec le revêtement, ainsi que cela est illustré en figure 3A.

Une autre variante de l'invention peut consister à prévoir quelques éléments 32 s'étendant sur une partie, ou toute la longueur, de la lèvre, comme présenté sur la figure 3B.

Bien sûr, les différentes variantes, ainsi que d'autres, peuvent être cumulées.

Par ailleurs, on peut prévoir en complément un collage. Par exemple, un joint de colle est prévu, sous chaque lèvre, avant le montage.

Pour que la fixation soit encore meilleure, on peut prévoir une encoche, un logement, ou une ouverture, dans le revêtement, dans lequel viennent s'inscrire les éléments d'accrochage.

On peut également prévoir d'adapter le bord du support, ou d'y rapporter un ou plusieurs éléments, avec lesquels les lèvres coopéreront pour obtenir une solidarisation efficace.

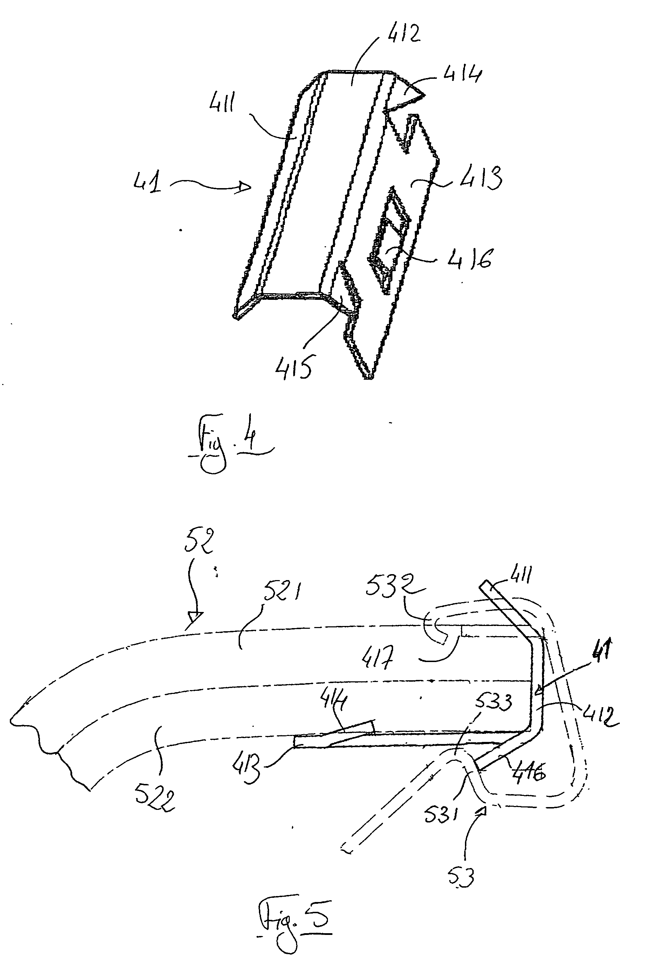

Ainsi, on peut prévoir la mise en place d'une ou plusieurs agrafes sur les bords de la fente, par exemple selon le modèle illustré en figure 4. De telles agrafes peuvent permettre d'améliorer la fixation, le guidage et/ou le maintien de la cassette, et, éventuellement, de renforcer le bord de la fente.

En figure 4, on a représenté un mode de réalisation avantageux d'une telle agrafe, sous sa forme avant montage. Cette agrafe 41 comprend :
- une partie supérieure 411 ;
- une partie intermédiaire 412 ;
- une partie inférieure 413 ;
- deux pointes 414 et 415 définies dans la partie inférieure 413 ;
- une patte de blocage 416, définie dans la partie inférieure 413.

La mise en oeuvre de cette agrafe 41 est illustrée, en coupe, sur la figure 5. A titre indicatif, on peut noter que l'échelle est, dans l'exemple, de l'ordre de 7:1.

L'agrafe 41 est amenée en regard du bord de la fente 51 (la partie intermédiaire 412 étant en contact avec ce bord 51). On pince, ou on écrase, alors les bords de l'agrafe, de façon que :
- la partie supérieure 411 s'inscrive dans la partie supérieure 521 du support 52, par exemple en PVC, et se trouve sensiblement dans le même plan que la partie supérieure 521 du support (un logement 522 peut avoir été prévu à cet effet) ;
- les parties 414 et 415 s'enfoncent dans la partie inférieure du support 52, par exemple en bois, de façon que l'agrafe 41 soit bien solidarisée au support (un collage complémentaire peut être envisagé).

La patte de blocage 416 s'étend alors, et forme une butée, contre laquelle vient prendre appui un bord 531 de la cassette 53, conformé à cet effet.

Ainsi, après montage, la cassette 53 est efficacement maintenue, et sa mise en place est aisée. La cassette est conçue de façon que :
- l'extrémité 532 est repliée pour coopérer avec le bord 417 de l'agrafe ;
- la partie 533 vient en appui contre la partie inférieure 413 de l'agrafe ;
- la partie 531 vient en appui contre la patte 416.

Plusieurs agrafes peuvent être prévues, sur un seul ou sur les deux bords de la fente. On peut également prévoir une unique pièce de renfort et/ou de maintien, pouvant si nécessaire s'étendre sur une grande portion du bord de la fente (voire sur toute sa longueur).

## Revendications

1. Store à enrouleur, notamment pour véhicule, comprenant un boîtier présentant une fente de guidage (15) au travers de laquelle s'étend un rideau rétractable,
ladite fente de guidage se prolongeant par des lèvres de fixation (12₁, 12₂) prévues pour prendre appui sur l'élément support (13) dudit store, après avoir été introduites dans une ouverture ménagée à cet effet dans ledit élément support, **caractérisé en ce qu'**au moins une desdites lèvres de fixation (12₁, 12₂) présente au moins un élément d'accrochage (21₁, 21₂) prévu pour s'ancrer dans ledit élément support (13), et appartenant au groupe comprenant :
- l'extrémité d'au moins une desdites lèvres repliée de façon à former un angle inférieur ou égal à 90° avec le reste de ladite lèvre ;
- une série de pointes ou d'éléments formant crochet, répartie sur la surface d'appui d'au moins une desdites lèvres.

2. Store à enrouleur selon la revendication 1, **caractérisé en ce que** les deux lèvres sont équipées d'éléments d'accrochage (21₁, 21₂) identiques.

3. Store à enrouleur selon l'une quelconque des revendications 1 et 2, **caractérisé en ce que** lesdits éléments d'accrochage (21₁, 21₂) sont configurés de façon à coopérer avec des encoches ou des ouvertures prévues à cet effet sur ledit élément support (13).

4. Store à enrouleur selon l'une quelconque des revendications 1 à 3, **caractérisé en ce qu'**au moins un desdits éléments d'accrochage (21₁, 22₂) coopère avec un élément de renfort et/ou de maintien (41) solidarisé audit élément support (13).

5. Store à enrouleur selon la revendication 4, **caractérisé en ce que** ledit élément de renfort et/ou de maintien (41) est une agrafe, rapportée à l'extrémité dudit élément support, puis solidarisée à ce dernier par écrasement.

6. Store à enrouleur selon l'une quelconque des revendications 4 et 5, **caractérisé en ce que** ledit élément de renfort et/ou de maintien (41) présente, dans le plan de la partie supérieure dudit élément support (13), une extrémité (417) susceptible de coopérer avec au moins un desdits éléments d'accrochage (21₁,21₂).

7. Store à enrouleur selon la revendication 6, **caractérisé en ce que** l'extrémité d'au moins une desdites lèvres est repliée (532) de façon à venir en contact avec ladite extrémité (417) dudit élément de renfort et/ou de maintien.

8. Store à enrouleur selon l'une quelconque des revendications 4 à 7, **caractérise en ce que** ledit élément de renfort et/ou de maintien (41) comprend au moins un élément d'accrochage (414) prévu pour s'ancrer dans la partie inférieure dudit élément support (13).

9. Store à enrouleur selon la revendication 8, **caractérisé en ce** ledit élément de renfort et/ou de maintien (41) présente deux pointes (414,415) prévues pour s'enfoncer dans ledit élément support (13).

10. Store à enrouleur selon l'une quelconque des revendications 4 à 9, **caractérisé en ce que** ledit élément de renfort et/ou de maintien (41) présente au moins une extension (416) formant butée, et prévue pour coopérer avec ledit boîtier, ce dernier venant prendre appui sur ladite extension.

## Claims

1. A roller blind, in particular for a vehicle, comprising a casing having a guide slot (15) through which there extends a retractable curtain,
said guide slot being extended by fixing lips (12₁, 12₂) provided to rest on the supporting element (13) of said blind, after having been introduced into an opening formed to this end in said supporting element, **characterised in that** at least one of said fixing lips (12₁, 12₂) has at least one catch element (21₁, 21₂) designed to become anchored in said supporting element (13) and belonging to the group comprising:
- the end of at least one of said lips folded back so as to form an angle smaller than or equal to 90° with the rest of said lip;
- a series of points or elements forming hooks, distributed over the bearing surface of at least one of said lips.

2. A roller blind according to claim 1, **characterised in that** the two lips are equipped with identical catch elements (21₁, 21₂).

3. A roller blind according to either one of claims 1 and 2, **characterised in that** said catch elements (21₁, 21₂) are configured so as to cooperate with notches or openings provided to this end on said supporting element (13).

4. A roller blind according to any one of claims 1 to 3, **characterised in that** at least one of said catch elements (21₁, 21₂) cooperates with a reinforcing and/or holding element (41) firmly connected to said supporting element (13).

5. A roller blind according to claim 4, **characterised in that** said reinforcing and/or holding element (41) is a clip, fitted to the end of said supporting element and then firmly connected thereto by compression.

6. A roller blind according to either one of claims 4 and 5, **characterised in that** said reinforcing and/or holding element (41) has, in the plane of the upper part of said supporting element (13), an end (417) capable of cooperating with at least one of said catch elements (21₁, 21₂).

7. A roller blind according to claim 6, **characterised in that** the end of at least one of said lips is folded back (532) so as to come into contact with said end (417) of said reinforcing and/or holding element.

8. A roller blind according to any one of claims 4 to 7, **characterised in that** said reinforcing and/or holding element (41) comprises at least one catch element (414) designed to become anchored in the lower part of said supporting element (13).

9. A roller blind according to claim 8, **characterised in that** said reinforcing and/or holding element (41) has two points (414, 415) designed to become embedded in said supporting element (13).

10. A roller blind according to any one of claims 4 to 9, **characterised in that** said reinforcing and/or holding element (41) has at least one extension (416) forming a stop and designed to cooperate with said casing, the latter coming to rest on said extension.

## Patentansprüche

1. Rollo, insbesondere für Fahrzeuge, mit einem Gehäuse mit einem Führungsschlitz (15), durch den sich ein einziehbarer Vorhang erstreckt, wobei der Führungsschlitz in Befestigungslippen (12₁, 12₂) ausläuft, die dafür vorgesehen sind, sich am Halterungselement (13) des Rollos anzulegen, nachdem sie in eine Öffnung eingeführt wurden, die zu diesem Zweck im Halterungselement ausgeführt wurde,
**dadurch gekennzeichnet, dass** mindestens eine der Befestigungslippen (12₁, 12₂) mindestens ein Klinkenelement (21₁, 21₂) aufweist, das dafür bestimmt ist, sich im Halterungselement (13) einzuklinken, und das zur Baugruppe gehört, die Folgendes umfasst:
- Ende mindestens einer der Lippen, das so gebogen ist, dass ein Winkel kleiner oder gleich 90° zur restlichen Lippe gebildet wird;
- Reihe von Spitzen oder Elementen, die einen Haken bilden und die über die Auflagefläche mindestens einer der Lippen verteilt sind.

2. Rollo nach Anspruch 1,
**dadurch gekennzeichnet, dass** die beiden Lippen mit identischen Klinkenelementen (21₁, 21₂) versehen sind.

3. Rollo nach einem der Ansprüche 1 und 2,
**dadurch gekennzeichnet, dass** die Klinkenelemente (21₁, 21₂) so ausgebildet sind, dass sie mit Kerben oder Öffnungen zusammenwirken, die zu diesem Zweck am Halterungselement (13) vorgesehen sind.

4. Rollo nach einem der Ansprüche von 1 bis 3,
**dadurch gekennzeichnet, dass** mindestens eines der Klinkenelemente (21₁, 22₂) mit einem Verstärkungs- bzw. Halteelement (41), das fest mit dem Halterungselement (13) verbunden ist, zusammenwirkt.

5. Rollo nach Anspruch 4,
**dadurch gekennzeichnet, dass** das Verstärkungs- bzw. Halteelement (41) eine Klammer ist, die auf das Ende des Halterungselements gesetzt ist und danach mit dem Halterungselement durch Quetschen fest verbunden wird.

6. Rollo nach einem der Ansprüche 4 und 5,
**dadurch gekennzeichnet, dass** das Verstärkungs- bzw. Halteelement (41) in der Ebene des oberen Teils des Halterungselements (13) ein Ende (417) aufweist, das mit mindestens einem der Klinkenelemente (21₁, 21₂) zusammenwirken kann.

7. Rollo nach Anspruch 6,
**dadurch gekennzeichnet, dass** das Ende von mindestens einer der Lippen so gebogen (532) ist, dass es das Ende (417) des Verstärkungs- bzw. Halteelements berührt.

8. Rollo nach einem der Ansprüche 4 bis 7,
**dadurch gekennzeichnet, dass** das Verstärkungs- bzw. Halteelement (41) mindestens ein Klinkenelement (414) umfasst, das dafür bestimmt ist, sich in den unteren Teil des Halterungselements (13) einzuklinken.

9. Rollo nach Anspruch 8,
**dadurch gekennzeichnet, dass** das Verstärkungs- bzw. Halteelement (41) zwei Spitzen (414, 415) aufweist, die dazu bestimmt sind, in das Halterungselement (13) einzugreifen.

10. Rollo nach einem der Ansprüche 4 bis 9,
**dadurch gekennzeichnet, dass** das Verstärkungs- bzw. Halteelement (41) mindestens einen Fortsatz (416) aufweist, der einen Anschlag bildet und dazu bestimmt ist, mit dem Gehäuse zusammenzuwirken, wobei sich das Gehäuse an den Fortsatz anlegt.
